# EUROPÄISCHE PATENTSCHRIFT

(11) **EP 2 978 349 B1**
(45) Veröffentlichungstag und Bekanntmachung des Hinweises auf die Patenterteilung: **15.07.2020**
(21) Anmeldenummer: 14710913.6
(22) Anmeldetag: 19.03.2014
(51) Int. Cl.: A47J 43/046, A47J 43/07

(54) **BEARBEITUNGSAUFSATZ MIT EINGRIFFSCHUTZ**
PROCESSING ATTACHMENT WITH CONTACT PROTECTION
ACCESSOIRE DE PRÉPARATION AVEC PROTECTION CONTRE LES MANIPULATIONS

(30) Priorität: 28.03.2013 DE 102013205545
(43) Veröffentlichungstag der Anmeldung: 03.02.2016
(73) Patentinhaber: BSH Hausgeräte GmbH, 81739 München (DE)
(72) Erfinder: PESEC, Jurij, 3301 Petrovce (SI); SABEC, Roman, 3327 Smartno (SI)
(86) Internationale Anmeldenummer: PCT/EP2014/055498
(87) Internationale Veröffentlichungsnummer: WO 2014/154545

(56) Entgegenhaltungen:
- WO-A1-00/24302
- WO-A1-00/24302
- DE-A1- 19 818 506
- FR-A1- 2 931 349
- FR-A1- 2 931 349

## Beschreibung

### Gebiet der Erfindung

Die Erfindung betrifft einen Bearbeitungsaufsatz zur Nahrungsmittelbearbeitung für die Verwendung mit einer Küchenmaschine gemäß des Oberbegriffs des Anspruchs 1, sowie eine Küchenmaschine mit derartigen Bearbeitungsaufsätzen gemäß Anspruch 6.

### Hintergrund der Erfindung

Die Offenlegungsschrift DE 102 269 41 A1 lehrt eine Küchenmaschine mit einem Rührgefäß. Sie soll hinsichtlich der Verriegelung des Rührgefäßes und des Deckels funktionssicher ausgestaltet sein. Dabei ist ein Freigabeelement gesondert von dem Rührgefäß und oder dem Deckel ausgebildet und das Freigabeelement kann durch Verdrehen des Rührgefäßes und/oder des Deckels des Rührgefäßes betätigt werden und nach erfolgter Verdrehung den Weg für ein Verriegelungselement freigeben. Hierbei ist das Freigabeelement Bestandteil des das Rührgefäß aufnehmenden Gehäuses. Eine Betätigung desselben erfolgt durch ein Verdrehen des Rührgefäßes und/oder des Deckels um die Gefäßvertikalachse, welche Drehbewegung weiter bevorzugt anschlagsbegrenzt ist. Diese, die Betriebsstellung des Rührgefäßes und/oder des Deckels definierende Verdrehstellung ist durch das hiernach freigegebene, bevorzugt gehäuseseitige Verriegelungselement verriegelt, sodass ein Eingriff in das Rührgefäß während des Betriebs nicht möglich ist. Diese bekannte Küchenmaschine soll sicherstellen, dass der Deckel des Rührgefäßes bei eingeschaltetem Rührwerk nicht entfernt werden kann.

Die Offenlegungsschrift DE 31 137 60 A1 zeigt und beschreibt ein elektromotorisch beschriebenes Antriebsaggregat, insbesondere für Mehrzweckküchenmaschinen. Ein Schieber wirkt dabei mit einer Sperrstange zusammen, die einen elektrischen Schalter zum Einschalten eines Antriebsmotors arretiert oder freigibt, wenn der Behälter des Zusatzgerätes geschlossen ist. Damit sichergestellt ist, dass der Deckel des Zusatzgeräts bei eingeschaltetem Motor nicht geöffnet und vom Behälter des Zusatzgeräts abgenommen werden kann, ist am Deckelrand des Deckels ein Verriegelungsfinger mit einer Kralle vorgesehen, die nach Durchtritt des Verriegelungsfingers durch eine Öffnung im Verriegelungsbolzen eine Drehung des Deckels um die Behälterachse relativ zum Behälter verhindert.

Die DE 69 811 231 T2 lehrt ein Elektroküchengerät für die Behandlung von Nahrungsmitteln. Es ist dafür eingerichtet, den Betrieb des Motors nur dann zuzulassen, wenn eine Schüssel auf einer Basis eines Gehäuses verriegelt ist und wenn diese Schüssel selbst durch den Deckel verriegelt ist. Der Deckel ist an der Schüssel mittels eines Bayonettesystems zur Befestigung verriegelt. Ist die Schüssel nicht an ihrem Platz auf der Basis, soll durch eine Abdeckung wirksam verhindert werden, das Antriebsaggregat des Küchengeräts einzuschalten.

Die französische Patentanmeldung FR 2 931 349 A1 beschreibt ein Gerät zur Zubereitung von Speisen, das eine Basis umfasst, die einen Motor beherbergt, der einem oberen Antriebselement zugeordnet ist, einen Zubehörkörper, der auf der Basis aufliegen kann, und eine Zubehörabdeckung, die an dem Zubehörkörper drehbar verriegelbar ist. Der Zubehörkörper trägt ein rotierendes Arbeitswerkzeug, das mit einem unteren Antriebselement verbunden ist, wobei die Zubehörabdeckung ein Steuerelement umfasst, das dazu eingerichtet ist, mit einem relativ zum Zubehörkörper gegen ein Vorspannelement beweglichen Sicherheitselement zusammenzuwirken. Das Sicherheitselement ist zwischen einer Sicherheitsposition, die das Antreiben des unteren Antriebselements durch das obere Antriebselement verhindert, wenn die Zubehörabdeckung nicht an dem Zubehörkörper angeordnet ist, und einer Arbeitsposition bewegbar, in der das obere Antriebselement mit dem unteren Antriebselement in Eingriff bringbar ist, wenn die Zubehörabdeckung durch Rotation am Zubehörkörper verriegelt ist. Gemäß der Erfindung bringt die Verriegelung der Zubehörabdeckung das Steuerelement mit einer Nut des Zubehörkörpers, die das Sicherheitselement beherbergt, in Eingriff, wobei das Steuerelement das Sicherheitselement in die Arbeitsposition zurückdrückt.

Die internationale Patentanmeldung WO 2000/24302 A1 beschreibt ein Küchengerätezubehör mit einem Behälter, einem drehbaren Werkzeug, einer Halterung für das Werkzeug und einem Kopplungsglied, durch den das Werkzeug mit einem Antriebsglied, das in einem Hauptgehäuse einer Küchenmaschine angeordnet ist, gekoppelt sein kann, wobei der Behälter lösbar mit der Halterung verbunden ist. Dabei ist das Zubehörteil mit einem Sicherheitselement und einer Verriegelungsvorrichtung versehen, die mit dem Sicherheitselement zusammenwirkt. Das Sicherheitselement kann relativ zu dem Kopplungselement von einer ersten Position, in der das Sicherheitselement die Kopplung des Kopplungselements mit dem Antriebsglied verhindert, in eine zweite Position verschoben werden, in der das Sicherheitselement das Koppeln des Kopplungselements an das Antriebsglied ermöglicht. Die Verriegelungsvorrichtung verriegelt das Sicherheitselement in seiner ersten Position, wenn der Behälter von der Halterung entkoppelt ist, und gibt das Sicherheitselement frei, wenn der Behälter mit der Halterung gekoppelt ist. Somit wird verhindert, dass das Werkzeug durch das Antriebselement angetrieben werden kann, wenn der Behälter nicht mit der Halterung gekoppelt ist, so dass der Benutzer des Zubehörs nicht durch das rotierende Werkzeug verletzt werden kann.

Die deutsche Patentanmeldung DE 198 18 506 A1 beschreibt ein Haushaltsgerät mit rotierendem Arbeitswerkzeug, das mit einer Kupplung mit einem Antriebsmotor in Triebverbindung gebracht werden kann. Ein Sicherheitsmechanismus bewirkt, dass zum Öffnen des Deckels eine Drucktaste betätigt werden muss, die die Kupplung auftrennt. Ist der Deckel geöffnet, so verbleibt die Kupplung in ihrer aufgetrennten Stellung. Erst bei vollständigem Verschließen des Gehäusedeckels wird die Kupplung wieder geschlossen.

### Der Erfindung zugrunde liegende Aufgabe

Der Erfindung liegt die Aufgabe zugrunde, einen Bearbeitungsaufsatz zu schaffen, der gegenüber dem Stand der Technik verbessert ist. Insbesondere soll der Bearbeitungsaufsatz einfacher handhabbar sein können, die Herstellung des Bearbeitungsaufsatzes vereinfacht sein können und die Sicherheit für den Benutzer verbessert sein. In vergleichbarer Weise soll eine Küchenmaschine mit einem solchen Bearbeitungsaufsatz verbessert werden.

### Erfindungsgemäße Lösung

Die Bezugszeichen in sämtlichen Ansprüchen haben keine einschränkende Wirkung, sondern sollen lediglich deren Lesbarkeit verbessern. Die der Erfindung zugrunde liegende Aufgabe wird durch einen Bearbeitungsaufsatz nach Anspruch 1 gelöst. Weiterhin wird die erfindungsgemäße Aufgabe durch eine Küchenmaschine nach Anspruch 5 gelöst.

Im Sinne der Erfindung versteht man unter Nahrungsmittelbearbeitung das Hächseln, Schneiden, Pürieren, allgemein Zerkleinern, Verrühren, Zerhacken, Vermischen (Mixen), oder Entsaften von Nahrungsmitteln, beispielsweise von Obst, Gemüse, Fleisch, Fisch, Eiern, Soßen und Cremes. Der Fachmann versteht, dass neben den explizit genannten Bearbeitungsmöglichkeiten der explizit vorstehend genannten Nahrungsmittel auch weitere in Küchen bekannte Bearbeitungsmethoden für eine Vielzahl unterschiedlicher Nahrungsmittel unter den Begriff der Nahrungsmittelbearbeitung fallen.

Im Sinne der Erfindung ist eine Küchenmaschine eine Handküchenmaschine, also ein Stabmixer oder ein Pürierstab. Auch eine Standküchenmaschine ist im Sinne der Erfindung eine Küchenmaschine. Unter diesen Begriff fallen Multifunktionsmaschinen, Saftpressen oder auch Standrührwerke, insbesondere für Teigwaren. Entsprechend kann ein Bearbeitungsaufsatz gemäß dieser Erfindung ein Bearbeitungsaufsatz für mobile oder auch stationäre Küchenmaschinen sein.

Bearbeitungswerkzeuge im Sinne der Erfindung sind Werkzeuge für Küchenmaschinen, die es ermöglichen, Nahrungsmittel wie oben beschrieben in dem Bearbeitungsaufsatz durch einen Kraftübertrag zu bearbeiten. Ein Bearbeitungswerkzeug kann entweder permanent mit dem Bearbeitungsaufsatz verbunden sein oder über Bearbeitungswerkzeugkupplungen lösbar mit dem Bearbeitungsaufsatz verbunden sein.

Dabei ist im Sinne der Erfindung ein Bearbeitungsaufsatz ein Behältnis, in dessen Bearbeitungsinnenraum Nahrungsmittel mit einer Küchenmaschine bearbeitet werden können. Dabei ist zu berücksichtigen, dass es im vorliegenden Fall um solche Bearbeitungsaufsätze geht, die über eine Gerätekupplung an die Küchenmaschine lösbar ankoppelbar sind.

Im Sinne der Erfindung ist unter dem Bearbeitungsinnenraum des Bearbeitungsaufsatzes der Raum im Bechergefäß zu verstehen, in dem Nahrungsmittel zur Bearbeitung eingebracht werden. Der Bearbeitungsinnenraum kann durch das Deckelelement geschlossen werden. Dies ist dann der Fall, wenn das Deckelelement auf das Bechergefäß aufgesetzt ist. Eine Sicherung gegen axialen Verlust bedeutet, dass nach Schließen des Deckels ein Zustand herbeigeführt wird, der ein unbeabsichtigtes Abnehmen des Deckelelements durch eine Blockadeeinrichtung erschwert. Eine solche Blockadeeinrichtung ist ein Bajonettverschluss, eine Verrastung oder auch eine Verschraubung.

Eine Gerätekupplung ist im Sinne der Erfindung eine Kupplung, die einen festen, jedoch lösbaren Halt des Bearbeitungsaufsatzes gegenüber der Küchenmaschine ermöglicht, sodass ein stabiles Antreiben der Werkzeuge und ein Bearbeiten von Nahrungsmitteln ermöglicht wird. Insbesondere ist eine Sicherung gegen unbeabsichtigtes axiales Lösen, also eine axiale Verlustsicherung, eine solche Gerätekupplung.

Durch den erfindungsgemäß ausgestalteten Bearbeitungsaufsatz nach Anspruch 1 kann der Vorteil erreicht werden, dass der Anwender besser und einfacher davor geschützt ist, in Kontakt mit rotierendem Bearbeitungswerkzeugen innerhalb des Bechergefäßes zu kommen, wenn die Küchenmaschine in Betrieb ist. Dies kann zum einen dadurch erreicht werden, dass die Gerätekupplung ausschließlich dann ein Ankoppeln des Bearbeitungsaufsatzes an die Küchenmaschine ermöglicht, wenn das Deckelelement das Bechergefäß abdichtend verschließt und zudem am Bechergefäß gegen axialen Verlust gesichert ist. Dabei sind seitens des Deckelelements ein oder mehrere Zahnelemente vorhanden, die in ein oder mehrere korrespondierende Zahnelemente seitens des Bechergefäßes eingreifen und diese verlagern können, wenn das Bechergefäß mit dem Deckelelement geschlossen ist, so dass nach Verlagern der korrespondierenden Zahnelemente die Gerätekupplung ein Ankoppeln des Bearbeitungsaufsatzes ermöglicht. Die korrespondierenden Zahnelemente sind seitens des Bechergefäßes an einer Zwischenkupplung angeordnet, wobei die Zwischenkupplung gegenüber dem Bechergefäß rotierbar gelagert ist, wobei die Gerätekupplung und die Zwischenkupplung zueinander drehfest sind, so kann durch Drehen des Deckelelements auf dem Bechergefäß die Zwischenkupplung mitrotiert werden.

Der Vorteil kann auch dadurch erreicht werden, dass ein Öffnen des Bechergefäßes blockiert wird, solange der Bearbeitungsaufsatz auf die Küchenmaschine aufgesetzt ist. Das Deckelelement kann also nur von dem Bechergefäß entfernt werden, wenn der Bearbeitungsaufsatz nicht auf die Küchenmaschine aufgesetzt ist Vorteilhafterweise ist es also möglich, gegebenenfalls bereits das Verbinden des Bearbeitungsaufsatzes mit der Küchenmaschine mechanisch unmöglich zu machen, falls nämlich der Benutzer das Bechergefäß nicht mit dem Deckelelement geschlossen hat. Außerdem kann ein Entfernen des Deckels unabhängig davon, ob die Küchenmaschine in Betrieb ist, oder nicht, verhindert werden, einfach schon dann, wenn der Bearbeitungsaufsatz auf die Küchenmaschine aufgesetzt ist und im Prinzip ein Betreiben der Bearbeitungswerkzeuge durch einen mit den Bearbeitungswerkzeugen lösbar gekoppelten Antrieb seitens der Küchenmaschine möglich wäre. Der Schritt des Befestigens des Bearbeitungsaufsatzes an der Küchenmaschine ist also nicht erforderlich, um den Eingriffschutz zu aktivieren. So kann die Bediensicherheit des Bearbeitungsaufsatzes erhöht werden, eine Vereinfachung der Sicherheitsmittel durch Verwendung mechanischer Lösungen ermöglicht sein und dadurch bedingt eine kostengünstigere Herstellung möglich sein. Weitere Vorteile, die durch den verbesserten Bearbeitungsaufsatz erreicht werden können, werden im Rahmen der Beschreibung von bevorzugten Ausführungsformen erläutert.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Es ist bevorzugt, dass das Deckelelement an das Bechergefäß mittels eines ersten Bajonettverschlusses lösbar ankoppelbar ist, um das Deckelelement am Bechergefäß gegen axialen Verlust zu sichern. Ein Bajonettverschluss ist ein bekanntes und bewährtes Mittel zur axialen Verlustsicherung. So kann eine preiswerte Verlustsicherung bereitgestellt und ein fester Sitz des Deckelelements auf dem Bechergefäß ermöglicht werden. Statt eines Bajonettverschlusses ist auch ein normaler Drehverschluss, beispielsweise in Form einer zwischen Deckelelement und Bechergefäß umlaufenden Schraubenlinie möglich. Vorzugsweise verjüngt sich der Schlitz des Drehverschlusses zum Ende der Schraubenlinie hin dann keilförmig, um einen besonders festen Sitz des Deckelelements auf dem Bechergefäß zu ermöglichen. Eine andere Art der Verlustsicherung kann in einer Rastverbindung zwischen Deckelelement und Bechergefäß bestehen.

Vorzugsweise weist die Gerätekupplung einen Blockadezustand, in der die Gerätekupplung ein Koppeln mit der Küchenmaschine mechanisch nicht zulässt, und einen Kuppelzustand, in der die Gerätekupplung ein Koppeln mit der Küchenmaschine mechanisch zulässt, auf, und nur dann, wenn sich die Gerätekupplung im Kuppelzustand befindet, ist ein Ankoppeln an die Küchenmaschine möglich. Bevorzugt ist, dass die Gerätekupplung zwischen Blockadezustand und Kuppelzustand überführbar ist, indem das Deckelelement auf das Bechergefäß aufgesetzt und gegenüber dem Bechergefäß rotiert wird, beispielsweise, in dem Moment, wenn ein erster Bajonettverschluss zwischen Deckelelement und Bechergefäß geschlossen wird. Diese Ausführungsform ermöglicht eine besonders benutzerfreundliche, weil leicht bedienbare Ausgestaltung einer Gerätekupplung. Der Benutzer kann so auf einfache Weise beim Verschließen des Bechergefäßes mit dem Deckelelement auch gleichzeitig die Gerätekupplung freigeben. Wird beispielsweise das Deckelelement in den Bajonettverschluss gedreht, kann ein Kontaktelement im Bechergefäß mit einem korrespondierenden Kontaktelement im Deckelelement zusammenwirken und durch Rotation die Gerätekupplung betriebsbereit machen, also in den Kuppelzustand überführen. Vorzugsweise verhindert eine Kupplungsbarriere im Bereich der Gerätekupplung im Blockadezustand eine Nutzung der Gerätekupplung. Besonders bevorzugt ist, dass die Kupplungsbarriere drehfest zum Bechergefäß angeordnet ist, nochmals besonders bevorzugt auf einer Innenwand des Bechergefäßes, die in einem Bereich des Bechergefäßes liegt, der von dem Bearbeitungsinnenraum, in dem Nahrungsmittel bearbeitet werden können, durch eine Wand getrennt ist. Nochmals besonders bevorzugt ist die Kupplungsbarriere einstückig mit dem Bechergefäß verbunden.

Seitens des Deckelelements sind ein oder mehrere Zahnelemente vorhanden, die in ein oder mehrere korrespondierende Zahnelemente seitens des Bechergefäßes eingreifen und diese verlagern können, wenn das Bechergefäß mit dem Deckelelement geschlossen ist, so dass nach Verlagern der korrespondierenden Zahnelemente die Gerätekupplung ein Ankoppeln des Bearbeitungsaufsatzes ermöglicht. Solche Zahnelemente können eine wirksame Kraftübertragung gewährleisten und sind einfach herzustellen. Vorzugsweise sind die Zahnelemente rechteckförmig oder auch zinnenartig ausgebildet. Sie können aber auch beispielsweise wellenförmig, dreieckig oder kammförmig sein. Vorzugsweise sind Gruppen von jeweils zwei Zahnelementen am Deckelelement vorhanden.

In einer bevorzugten Ausführungsform stellen die Zahnelemente am Deckelelement die Fortsetzung einer Innenwand des Deckelelements dar und stehen in axialer Richtung von dem Deckelelement ab. Solch eine Anordnung kann einfach zu konstruieren sein und eine gute Interaktion zwischen Deckelelement und Bechergefäß ermöglichen. Bevorzugt ist, dass die Innenfläche des Deckelelements die Innenseite eines ersten Abschnitts des Deckelelements mit einem ersten Durchmesser bildet, und zwischen den davon axial abstehenden Zahnelementen und einer weiteren Wand des Deckelelements, die einen zweiten Abschnitt des Deckelelements mit einem zweiten, größeren Durchmesser radial umgibt und abschließt, ein Ringspalt besteht. Entsprechend sind die Zahnelemente vorzugsweise im Bereich des zweiten Abschnitts des Deckelelements angeordnet. Besonders bevorzugt ist, dass die Zahnelemente flächig an der Außenfläche einer Wand eines ersten Abschnitts des Bechergefäßes anliegen, der einen kleineren Durchmesser als der erste Abschnitt des Deckelelements aufweist, nachdem das Deckelelement auf dem Bechergefäß aufgesetzt worden ist. Nochmals besonders bevorzugt ist, dass die Zahnelemente am Deckelelement in einem Ringspalt zwischen erstem und einem zweitem Abschnitt des Bechergefäßes, der einen größeren Durchmesser als der erste Abschnitt aufweist, auf der Umfangslinie des ersten Abschnitts des Bechergefäßes entlanggleiten können, also um die Außenfläche der Wand des ersten Abschnitts des Bechergefäßes rotiert werden können. Vorzugsweise ist dem Zahnelement entgegen der Festdrehrichtung des Deckelelements auf dem Bechergefäß mindestens abschnittsweise eine rampenförmige Wand vorgelagert, die mit der Innenfläche des ersten Abschnitts des Deckelements radial bündig abschließt. Der Radius der rampenförmigen Wand entspricht also vorzugsweise dem Radius des Innendurchmessers des ersten Abschnitts des Deckelelements. So kann die rampenförmige Wand zur Abdichtung des Bechergefäßes im Betrieb beitragen.

Vorzugsweise umfasst die Zwischenkupplung die Gerätekupplung. Besonders bevorzugt sind die Zahnelemente an der Zwischenkupplung einstückig angeformt. Bevorzugt ist, dass die korrespondierenden Zahnelemente ein rechteckiges Zahnprofil aufweisen, insbesondere wenn die Zahnelemente am Deckelelement ebenfalls rechteckförmig sind. Generell ist bevorzugt, dass die Zahnelemente am Deckelelement und die korrespondierenden Zahnelemente seitens des Bechergefäßes sich ergänzende Profile aufweisen, um die Griffigkeit zu optimieren. Die Zwischenkupplung ist gegenüber dem Bechergefäß rotierbar gelagert. Besonders bevorzugt ist, dass die Gerätekupplung und die Zwischenkupplung zueinander drehfest sind. So kann durch Drehen des Deckelelements auf dem Bechergefäß die Zwischenkupplung mitrotiert werden. Besonders vorzugsweise kann auf diese Weise die Gerätekupplung freigegeben werden, indem die Zwischenkopplung relativ zu den Kupplungsbarrieren, die vorzugsweise drehfest zum Bechergefäß sind, so wegrotiert wird, dass Kupplungsöffnungen in der Gerätekupplung freigegeben werden. Dann erst kann der Bearbeitungsaufsatz über die Gerätekupplung mit der Küchenmaschine verbunden werden. So kann die Benutzersicherheit erhöht sein.

Eine bevorzugte Zwischenkupplung ist im zweiten Abschnitt des Bechergefäßes angeordnet und hat vorzugsweise im Wesentlichen die Form eines scheibenartigen Rundzylinders. So kann die Zwischenkupplung von Verschmutzungen durch Nahrungsmittel freigehalten werden und zudem eine gute Drehbarkeit der Zwischenkupplung gegenüber dem Bechergefäß erreichbar sein. Bevorzugt ist, dass das Bechergefäß die ringförmige Zwischenkupplung radial, besonders bevorzugt koaxial umgibt. Besonders bevorzugt ist, dass der zweite Abschnitt des Bechergefäßes die Zwischenkupplung radial umgibt. Bevorzugt ist, dass die Zwischenkupplung mehrere Öffnungen, insbesondere zwei, drei oder vier Öffnungen aufweist, in die Stegelemente einer Küchenmaschine durch Verdrehen des Bechergefäßes im auf die Küchenmaschine aufgesetzten Zustand gegenüber der Küchenmaschine in korrespondierenden Nuten in der Kupplungsbarriere eingleiten können. Entsprechend ist es vorteilhaft, die Gerätekupplung bevorzugt als zweiten Bajonettverschluss auszuführen. So kann ein sicherer Halt zwischen Bearbeitungsaufsatz und Küchenmaschine gewährleistet sein.

Vorzugsweise ist die Zwischenkupplung gegen ein Verdrehen gegenüber dem Bechergefäß durch eine Zwischenkupplungsrotationsblockade blockiert, solange das Deckelelement nicht auf das Bechergefäß aufgesetzt ist. So kann ein Freigeben der Kupplungsöffnungen der Gerätekupplung in der Zwischenkupplung wirksam erschwert werden, bis das Deckelelement so auf das Bechergefäß aufgesetzt worden ist, dass es auf dem Bechergefäß festgedreht werden kann. Eine besonders bevorzugte Zwischenkopplungsrotationsblockade umfasst einen Rotationsblockadezapfen, der durch ein elastisches Element, vorzugsweise eine Spiralfeder, in eine Blockadeposition vorgespannt ist. In der Blockadeposition greift der Rotationsblockadezapfen vorzugsweise in eine Rastöffnung am Bechergefäß ein, während der Rotationsblockadezapfen drehfest relativ zur Zwischenkupplung an dieser angeordnet ist. So kann eine Rotation der Zwischenkupplung gegenüber dem Bechergefäß, durch welche die Gerätekupplung verwendbar gemacht würde, erschwert oder sogar verhindert werden, solange das Deckelelement nicht ordnungsgemäß aufgesetzt worden ist. Wird das Deckelelement jedoch auf das Bechergefäß ordnungsgemäß aufgesetzt, verlagert das Deckelelement den Rotationsblockadezapfen entgegen der Federkraft aus der Rastöffnung des Bechergefäßes heraus. Vorzugsweise erfolgt dies durch eines der Zahnelemente am Deckelelement. Das Zahnelement am Deckelelement verlagert dann vorzugsweise ein Kontaktierungsteil, das mit dem Rotationsblockadezapfen starr in Verbindung steht, entgegen der Kraft des elastischen Elements, so dass gleichzeitig der Rotationsblockadezapfen aus der Rastöffnung herausverlagert wird. Erst dann kann die Zwischenkupplung durch Verdrehen in Korotation mit dem Deckelelement die Kupplungsöffnungen der Gerätekupplung freigeben. So kann eine besonders stark erhöhte Benutzersicherheit erreicht werden.

Ein Bechergefäß gemäß Anspruch 1 kann zusätzlich ebenfalls so ausgestaltet sein, dass ein Öffnen des Bechergefäßes blockiert wird, solange der Bearbeitungsaufsatz auf die Küchenmaschine aufgesetzt ist. Dies erlaubt eine doppelte Sicherheit bezüglich eines möglichen Eingreifens des Benutzers in im Betrieb befindliche Bearbeitungswerkzeuge im Innenraum des Bechergefäßes. Das Bechergefäß kann vorteilhafterweise nur auf die Küchenmaschine aufgesetzt werden, wenn das Deckelelement mit dem Bechergefäß verbunden ist. Zudem kann das Deckelelement vorzugsweise nur dann wieder von dem Bechergefäß entfernt werden, wenn der Bearbeitungsaufsatz nicht mehr auf die Küchenmaschine aufgesetzt ist. Vorzugsweise verhindert die Blockadeeinrichtung, dass das Deckelelement gegenüber dem Bechergefäß aus einem ersten Bajonettverschluss wieder herausgedreht werden kann, solange das Bechergefäß auf der Küchenmaschine steht.

Vorzugsweise weist das Bechergefäß ein elastisch vorgespanntes Kontaktelement auf, das eine Freigabestellung und eine Haltestellung kennt, und das in der Haltestellung verhindert, dass das Deckelelement von dem Bechergefäß gelöst werden kann, solange der Bearbeitungsaufsatz auf die Küchenmaschine aufgesetzt ist. Bevorzugt ist, dass das Kontaktelement in die Freigabestellung vorgespannt ist. Vorzugsweise wird das Kontaktelement durch Aufsetzen des Bearbeitungsaufsatzes auf die Küchenmaschine in die Haltestellung verlagert, besonders vorzugsweise entgegen der Vorspannung. Es ist bevorzugt, dass die Vorspannung durch ein elastisches Element, beispielsweise eine Feder, erzeugt wird. Vorteil eines solchen Kontaktelements kann sein, dass ohne Zutun des Benutzers das Deckelelement am Bechergefäß verriegelt wird, sobald der Benutzer den Bearbeitungsaufsatz auf die Küchenmaschine aufsetzt. So kann ein einfacher und sicherer Betrieb der Küchenmaschine gewährleistet werden.

Bevorzugt ist, dass an dem Kontaktelement eine Nase angeordnet ist, die in der Haltestellung des Kontaktelements verhindert, dass eine axiale Verlustsicherung des Deckelelements außer Kraft gesetzt wird. Solch eine mechanische Konstruktion kann sehr einfach zu realisieren sein. Vorzugsweise wird die Nase gemeinsam mit dem Kontaktelement entgegen der Vorspannung der Feder verlagert, wenn der Bearbeitungsaufsatz auf die Küchenmaschine aufgesetzt wird. Besonders bevorzugt ist, dass die Nase eine Rotation einer gegenüber dem Bechergefäß drehbar angeordneten Zwischenkupplung verhindert, falls diese beispielsweise über Zahnelemente mit dem Deckelelement in Verbindung steht. Ist das Deckelelement beispielsweise per erstem Bajonettverschluss gegen axialen Verlust gesichert, kann auf die beschriebene Weise ein Lösen des ersten Bajonettverschlusses unterbunden werden, solange sich das Kontaktelement in der Haltestellung befindet, also wenn der Bearbeitungsaufsatz auf die Küchenmaschine aufgesetzt ist. Bevorzugt ist, dass die Nase bei Betätigung des Kontaktelements axial aus einer Nasenführungsnut in einer Kupplungsbarriere herausverschoben wird und so die Rotation der Zwischenkupplung gegenüber dem Bechergefäß verhindert wird. In einer besonders bevorzugten Ausführungsform ist jeweils eine Nase pro Kupplungsbarriere vorhanden. So kann eine besonders stabile Blockade der Zwischenkupplung und somit des Deckelelements erreicht werden. Es kann günstig sein, genau zwei Nasen und genau zwei Kupplungsbarrieren zu haben, da sich eine Gerätekupplung mit genau zwei Kupplungsöffnungen leicht herstellen lässt und somit günstig verfügbar und trotzdem sehr stabil sein kann.

In einer anderen Ausführungsform solcher Nasen, also bei einem zweiten Nasentyp, interagieren die Nasen vorzugsweise direkt mit den Zahnelementen am Deckelelement, um ein Lösen des Deckelelementes zu verhindern. Die Nasen vom zweiten Nasentyp dringen beim Verlagern des Kontaktelements vorzugsweise in den Zwischenraum zwischen zwei Zahnelementen des Deckelelements ein, stehen also mit dem Kontaktelement in einer starren Translationsverbindung. Das Deckelelement kann dann ebenfalls nicht mehr gegenüber dem Bechergefäß verdreht und gelöst werden. So kann eine andere einfache, aber wirkungsvolle mechanische Drehblockade für das Deckelelement bereitgestellt werden. Beide Nasentypen können einzeln oder in Kombination miteinander eingesetzt werden. Außerdem ist es mittels der Nasen vom zweiten Nasentyp möglich, ein Verlagern des Kontaktelements entgegen der Vorspannung der Feder zu verhindern, solange das Deckelelement nicht korrekt auf dem Bechergefäß befestigt ist. Dies ist beispielsweise realisierbar, indem das Bechergefäß so ausgeführt ist, dass die Nasen vom zweiten Nasentyp nur dann verlagert werden können, wenn sie zwischen die Zahnelemente des Deckelelements eindringen können. Ansonsten sind sie durch beispielsweise Sperrstege entgegen der Vorspannung der Feder translationsblockiert. Dann ist auch das Kontaktelement in der Haltestellung blockiert, so dass das Bechergefäß nicht auf die Küchenmaschine aufgesetzt werden kann. Auch auf diese Weise wird eine Möglichkeit geschaffen, die Gerätekupplung zu blockieren und ein Ankoppeln des Bearbeitungsaufsatzes an die Küchenmaschine zu verhindern, solange das Deckelelement nicht ordnungsgemäß an dem Bearbeitungsaufsatz angekoppelt ist. Es ist möglich, die Nasen vom zweiten Nasentyp gemeinsam mit einer Gerätekupplung mit Kupplungsbarrieren, wie oben beschrieben, bereitzustellen, um eine besonders gute Blockade der Gerätekupplung erreichen zu können. Es ist aber auch möglich, entweder nur die Gerätekupplung mit Kupplungsbarrieren, oder nur die Verlagerungsblockierung mittels Nasen vom zweiten Nasentyp zu realisieren, beispielsweise um Kosten zu sparen.

Vorzugsweise ist das Kontaktelement in einer Aufsicht entlang einer Abtriebsachse einer Abtriebskupplung abschnittsweise ringförmig ausgeführt. Eine ringförmige Ausführungsform erlaubt einen gleichförmigen Anpressdruck auf eine Fläche zu verteilen. So wird eine gleichmäßige Verschiebung des Kontaktelements und gegebenenfalls der Nase entgegen des Federdrucks ermöglicht. Alternativ kann aber auch beispielsweise ein stiftförmiges Kontaktelement verwendet werden. Dann sind bevorzugt mehrere stiftförmige oder stegförmige Kontaktelemente vorzugsweise in gleichen Winkelabständen um die Achse der Antriebskupplung verteilt. So kann gleichfalls eine gute Druckverteilung zur Verlagerung des Kontaktelementes ermöglicht werden.

Bevorzugt ist, dass das Kontaktelement koaxial hinsichtlich der Antriebskupplung, die durch eine Bodenfläche des Bechergefäßes hindurch mit einer Antriebseinheit der Küchenmaschine verbindbar ist, angeordnet ist. Dies ermöglicht eine zentrale oder auch symmetrische Anordnung des Kontaktelementes in der Standfläche des Bearbeitungsaufsatzes. Dadurch wird eine komfortable Installation des Bechergefäßes auf einer Küchenmaschine möglich, wenn die Antriebskupplung und das Kontaktelement beispielsweise koaxial zueinander angeordnet sind, weil die Verbindung von Abtrieb und Antrieb und die Einnahme der Haltestellung des Kontaktelementes zeitgleich erfolgen können. Vorzugsweise umgibt auch das elastische Element, dass das Kontaktelement vorspannt, die Abtriebskupplung koaxial.

Bevorzugt ist, dass genau ein Bearbeitungswerkzeug im Bearbeitungsinnenraum des Bearbeitungsaufsatzes angeordnet ist. Vorzugsweise ist auf einer Standfläche des Bechergefäßes ein Bearbeitungswerkzeug im Bearbeitungsinnenraum des Bearbeitungsaufsatzes angeordnet. Dies kann eine kostengünstige und zweckmäßige Lösung sein. Beispielsweise können verschiedene Bearbeitungsaufsätze für unterschiedliche Bearbeitungszwecke bereitgestellt werden. Alternativ können aber auch mehrere Bearbeitungswerkzeuge vorhanden sein, wodurch der Vorteil erreicht werden kann, dass ein schnellerer Bearbeitungsprozess ermöglicht wird. Auch ist es möglich, dass der Bearbeitungsaufsatz anstelle eines Bearbeitungswerkzeugs nur eine Bearbeitungswerkzeugkupplung aufweist, um verschiedene Bearbeitungswerkzeuge in dem Bechergefäß betreiben zu können. Besonders vorzugsweise ist dies eine Systemkupplung. So können bestimmte Arten von Bearbeitungswerkzeugen nur mit bestimmten Arten von Bearbeitungsaufsätzen verwendbar sein und es kann verhindert werden, dass bestimmte Bearbeitungswerkzeuge mit für die Bearbeitungsmethode ungeeigneten Bearbeitungsaufsätzen verkoppelt werden. Dadurch kann die Flexibilität des Bearbeitungsaufsatzes erhöht sein. Zudem kann die Benutzerfreundlichkeit verbessert sein.

Vorzugsweise sind sowohl das Deckelelement als auch das Bechergefäß im Wesentlichen zylinderförmig geformt. Diese Gestaltung kann für Bearbeitungsaufsätze für Küchenmaschinen besonders vorteilhaft sein. So kann beispielsweise eine besonders gute Abdichtung zwischen Deckelelement und Bechergefäß erreicht werden, um ein Austreten von Nahrungsmitteln bei der Bearbeitung besonders wirkungsvoll verhindern zu können. Auch kann so ein großer Bearbeitungsinnenraum zur Nahrungsmittelbearbeitung geschaffen werden. Besonders bevorzugt ist eine kreiszylindrische Form von Deckelelement und Bechergefäß. Das kann erlauben, das Deckelelement in beliebiger Orientierung auf das Bechergefäß aufzusetzen und das Deckelelement gegenüber dem Bechergefäß im montierten Zustand koaxial zu rotieren. Bevorzugt ist zu diesem Zweck, dass das Deckelelement vollständig von dem Bechergefäß gelöst werden kann. Es kann aber auch lösbar oder unlösbar am Bechergefäß angelenkt sein. Alternativ ist es möglich, das Bechergefäß rundzylindrisch und das Deckelelement mit einem eckigen Querschnitt zu gestalten. So kann das Deckelelement besser greifbar sein, was vorteilhaft sein kann, wenn der Benutzer das Deckelelement gegenüber dem Bechergefäß rotieren möchte. Ein geeigneter eckiger Querschnitt kann drei, vier, fünf, oder auch sechs bis zehn Ecken aufweisen.

In einer bevorzugten Ausführungsform weist das Deckelelement einen ersten Abschnitt mit einem ersten Durchmesser auf und einen zweiten Abschnitt mit einem zweiten Durchmesser, der größer ist als der erste Durchmesser, und/oder weist das Bechergefäß einen ersten Abschnitt mit einem ersten Durchmesser auf, und einen zweiten Abschnitt mit einem zweiten Durchmesser, der größer ist als der erste Durchmesser. Bevorzugt hat jeder der Abschnitte jeweils einen konstanten Durchmesser. Besonders bevorzugt ist im ersten Abschnitt des Bechergefäßes der Bearbeitungsinnenraum gebildet, der zur Nahrungsmittelbearbeitung nutzbar ist, während sich im zweiten Abschnitt, der von einer Arbeitsöffnung des Bearbeitungsinnenraums des Bechergefäßes zum Einfüllen von Nahrungsmitteln beabstandet ist, die Gerätekupplung befindet. Dadurch kann eine Verschmutzung der Gerätekupplung durch Nahrungsmittel verhindert werden. Vorzugsweise umgibt beim Bechergefäß der zweite Abschnitt den ersten Abschnitt abschnittsweise koaxial. Besonders vorzugsweise ist beim Deckelelement der erste Abschnitt, bezogen auf seine axiale Längsausdehnung, sehr viel größer als der zweite Abschnitt. Besonders bevorzugt ist, dass der zweite Abschnitt einer schmalen Hutkrempe gleicht, die vom ersten Abschnitt des Deckelelements an einem offenen Ende des Deckelements auskragt. Derartige Deckelelemente und Bechergefäße sind vorzugsweise im Wesentlichen rundzylindrisch geformt.

Bevorzugt ist, dass das Deckelelement das Bechergefäß mindestens abschnittsweise koaxial umgeben kann, um den Innenraum, der vom Bechergefäß und dem Deckelelement umschlossen wird, abdichtend zu verschließen. Vorzugsweise berührt die Innenseite des ersten Abschnitts des Deckelelements radial die Außenseite des ersten Abschnitts des Bechergefäßes, wenn das Deckelelement auf dem Bechergefäß verschließend aufgesetzt ist. Besonders bevorzugt umgibt der zweite Abschnitt des Deckelelements radial den zweiten Abschnitt des Becherelements. Auf die beschriebene Weise kann eine gute Abdichtung zwischen Deckelelement und Bechergefäß erreicht werden.

Eine bevorzugte Küchenmaschine nach Anspruch 6 ist eine Standküchenmaschine. Solche Standküchenmaschinen können oft hohe Leistungen über ihren Antrieb bereitstellen, so dass einerseits ein fester Sitz eines Bearbeitungsaufsatzes, beispielsweise durch einen Bajonettverschluss, erwünscht ist und andererseits ein Betrieb ohne Deckelelement verhindert werden soll, um ein Verspritzen von Nahrungsmitteln oder Verletzungen des Benutzers durch Eingreifen in rotierende Werkzeuge vermeiden zu können. Wie bereits vorstehend beschrieben, sind aber prinzipiell auch andere Küchenmaschinen geeignet, mit einem erfindungsgemäßen Bearbeitungsaufsatz verwendet zu werden, beispielsweise Stabmixer oder Handmixer. In diesem Fall kann es sinnvoll sein, das Bearbeitungswerkzeug durch das Deckelelement hindurch betreibbar anzuordnen. Entsprechend ist dann bevorzugt, dass das Bearbeitungswerkzeug oder eine geeignete Kupplung für das Werkzeug am Deckelelement angeordnet sind und das Bearbeitungswerkzeug dann von oben in den Innenraum des Bechergefäßes hineinreicht, anstatt vom Boden des Bechergefäßes nach oben hervorzustehen, wie es bei Standküchenmaschinen üblicherweise der Fall ist. Es versteht sich, dass bei Handgeräten in der Regel das Handgerät auf den Bearbeitungsaufsatz aufgesetzt wird, während bei Standküchenmaschinen in der Regel der Bearbeitungsaufsatz auf die Standküchenmaschine aufgesetzt wird.

### Kurzbeschreibung der Zeichnungen

Weitere vorteilhafte Ausgestaltungen werden nachfolgend anhand der in den Zeichnungen dargestellten Ausführungsbeispiele, auf welche die Erfindung jedoch nicht beschränkt ist, beschrieben.

Es zeigen schematisch:
- Figur1: einen perspektivischen Längsschnitt durch einen erfindungsgemäßen Bearbeitungsaufsatz und sein Bechergefäß mit Deckelelement;
- Figur 2: einen senkrechten Längsschnitt durch einen solchen Bearbeitungsaufsatz;
- Figur 3: eine perspektivische Aufsicht auf eine Standfläche eines erfindungsgemäßen Bearbeitungsaufsatzes, in deren Bereich ein Bajonettverschluss und eine Abtriebsachse angeordnet sind;

Figuren 4a und 4b eine Schrägaufsicht auf die Abstellseite des Bechergefäßes und eine seitliche Aufsicht auf die ringförmige Zwischenkupplung und ein elastisches Element, dass das Kontaktelement in eine Freigaberichtung vorspannt; und

Figuren 5a und 5b das Kontaktelement in der Haltestellung, in der ein Lösen des Deckelelements von dem Bechergefäß nicht möglich ist.

### Detaillierte Beschreibung von Ausführungen der Erfindung

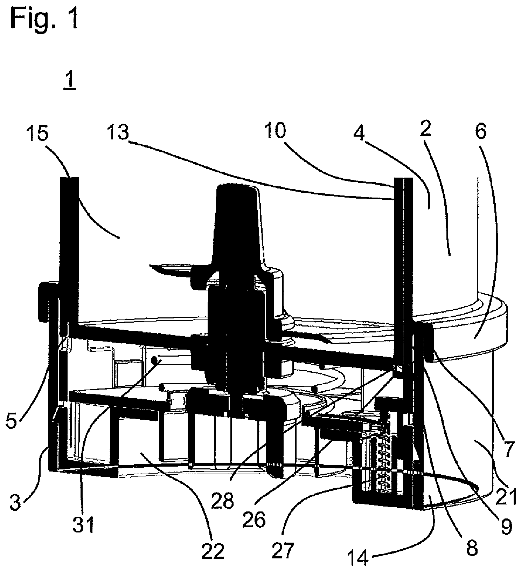

Die Figuren 1 bis 5 zeigen eine Ausführungsform eines erfindungsgemäßen Bearbeitungsaufsatzes 1, beziehungsweise solche Elemente, die für einen erfindungsgemäßen Bearbeitungsaufsatz 1 von besonderer Bedeutung sein können.

Im vorliegenden Ausführungsbeispiel handelt es sich um einen Bearbeitungsaufsatz 1 für eine Standküchenmaschine, speziell eine Multifunktionsküchenmaschine (nicht gezeigt).

Ein erfindungsgemäßer Bearbeitungsaufsatz 1 umfasst ein Deckelelement 2 und ein Bechergefäß 3. Zunächst wird das Deckelelement 2 in seinen Einzelheiten beschrieben.

Wie in Figur 1 zu sehen ist, ist das Deckelelement 2 in der gezeigten Ausführungsform des Bearbeitungsaufsatzes 1 rundzylindrisch geformt. Aus einem ersten Abschnitt 4 des Deckelelementes 2 mit einem ersten, konstanten Durchmesser kragt nahe einem offenen Ende 5 des Deckelelementes 2 ein zweiter Abschnitt 6 des Deckelelements 2 aus, der einen größeren Durchmesser aufweist, als der erste Abschnitt 4. Bezogen auf seine axiale Erstreckung ist der erste Abschnitt 4 des Deckelelements 2 sehr viel größer als der zweite Abschnitt 6 des Deckelelements 2. Der zweite Abschnitt 6 des Deckelelements 2 hat eine Ringaußenwand 7 und abschnittsweise eine Ringinnenwand 8. Die Ringaußenwand 7 umgibt die Ringinnenwand 8 koaxial mit konstantem Abstand. An der nach innen gerichteten Oberfläche der Ringaußenwand 7 sind zwei Zapfen (nicht gezeigt) vorhanden, die Teil eines ersten Bajonettverschlusses sind, der eine feste, aber lösbare Kopplung zwischen Deckelelement 2 und Bechergefäß 3 ermöglicht. Die Zapfen liegen sich radial gegenüber. Zwischen Ringaußenwand 7 und Ringinnenwand 8 des zweiten Abschnitts 6 des Deckelelements 2 ist ein Ringspalt 9 gebildet.

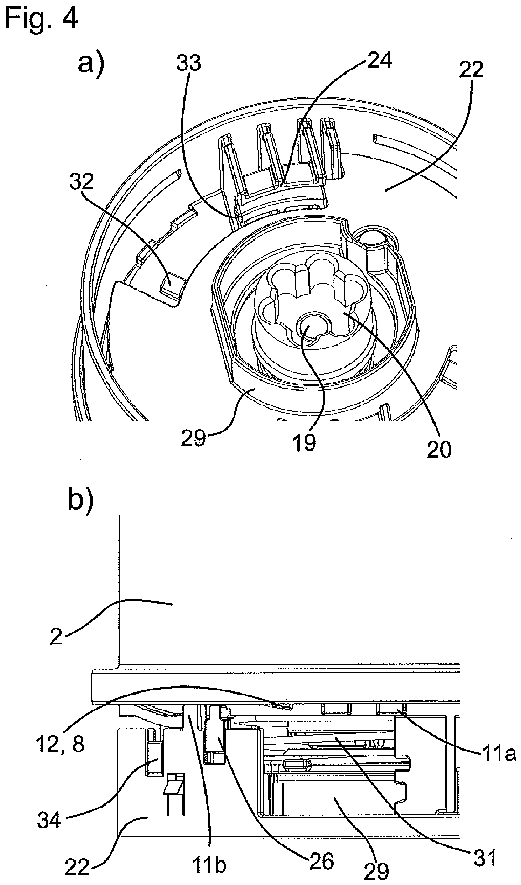

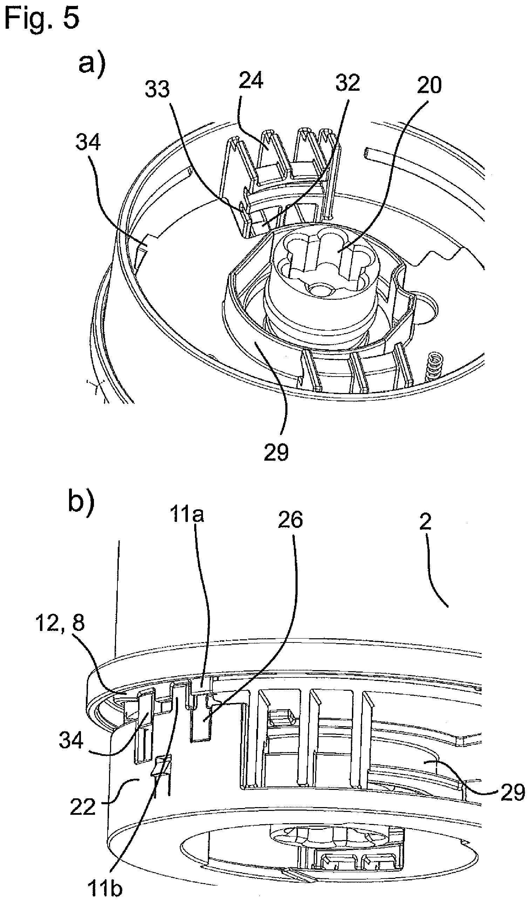

Wie insbesondere in den Figuren 4b und 5b zu erkennen ist, bildet die Ringinnenwand 8 eine Fortsetzung einer Innenfläche 10 des ersten Abschnitts 4 des Deckelelements 2. An der Ringinnenwand 8 sind Zahnelemente 11a ausgebildet, die in Richtung des offenen Endes 5 des Deckelelements 4, also in axialer Richtung, zinnenartig abstehen. Es sind zweimal zwei Zahnelemente 11a vorhanden, die rechteckig ausgeführt sind und sich radial gegenüberliegen. Sie erstrecken sich im zweiten Abschnitt 6 des Deckelelements 2 und stehen in einer seitlichen Aufsicht, wie in Figur 4b zu sehen, über das offene Ende 5 des Deckelelements 2 hervor . Die Zahnelemente 11a bilden gemeinsam mit rampenförmigen Wänden 12, die den Zahnelementen 11a einseitig entgegen der Festdrehrichtung des Deckelelements vorgelagert sind, die Ringinnenwand 8 des zweiten Abschnitts 6 des Deckelelements 2. So kann die Ringinnenwand 8 zur Abdichtung des Bechergefäßes 3 im Betrieb beitragen.

Im Folgenden wird das Bechergefäß 3 detailliert beschrieben. Es umfasst wie das Deckelelement 2 einen ersten Abschnitt 13 mit einem konstanten Durchmesser und einen zweiten Abschnitt 14 mit einem konstanten Durchmesser. Innerhalb des ersten Abschnitts 13 des Bechergefäßes 3 befindet sich ein Bearbeitungsinnenraum 15 zur Bearbeitung von Nahrungsmitteln. Er ist durch eine Arbeitsöffnung 16 des Bechergefäßes 3 zugänglich. Darin ist ein Bearbeitungswerkzeug 17 zur Nahrungsmittelbearbeitung angeordnet, in diesem Fall ein Schneidmesser. Innerhalb des zweiten Abschnitts 14 ist eine Gerätekupplung 18 zum Ankoppeln des Bearbeitungsaufsatzes 1 an die Küchenmaschine angeordnet. Eine Abtriebsachse 19 des Bearbeitungswerkzeugs 17 reicht aus dem ersten Abschnitt heraus und in den zweiten Abschnitt 14 hinein. Dort endet sie in einer Abtriebskupplung 20 zur Ankopplung an eine Küchenmaschine, so dass das Bearbeitungswerkzeug 17 im Bearbeitungsinnenraum 15 von einer Kraftquelle seitens der Küchenmaschine in Rotation versetzt werden kann. Der erste Abschnitt 13 und der zweite Abschnitt 14 des Bechergefäßes 3 sind rundzylindrisch geformt und zwar derart, dass der erste Abschnitt 13 des Bechergefäßes 3 im Durchmesser gerade so viel kleiner ist, dass der erste Abschnitt 4 des Deckelelements 2 darübergestülpt werden kann. Der zweite Abschnitt 14 des Bechergefäßes 3 ist im Durchmesser größer als der erste Abschnitt13 des Bechergefäßes 3, aber kleiner als der Durchmesser des zweiten Abschnitts 6 des Deckelelements 2, so dass die Ringaußenwand 7 des zweiten Abschnitts 6 des Deckelelements 2 eine Außenwand 21 des zweiten Abschnitts 14 des Bechergefäßes 3 abschnittsweise koaxial und bündig radial umgeben kann. Das Deckelelement 2 kann also das Bechergefäß 3 verschließen, indem das offene Ende 5 des Deckelelements 2 über die Arbeitsöffnung 16 des Bechergefäßes 3 gestülpt wird, woraufhin das Deckelelement 2 das Bechergefäß 3 abschnittsweise koaxial umgibt und somit den Bearbeitungsinnenraum 15 des Bechergefäßes 3 gut abdichten kann. Auf der Außenwand 21 des zweiten Abschnitts 14 sind radial außenliegend als Teil des ersten Bajonettverschlusses Führungsnuten für die damit korrespondierenden Zapfen am zweiten Abschnitt 6 des Deckelelements 2 vorhanden. Somit kann das Deckelelement 2 wirkungsvoll durch den ersten Bajonettverschluss an das Bechergefäß 3 angekoppelt werden, um es gegen axialen Verlust zu sichern.

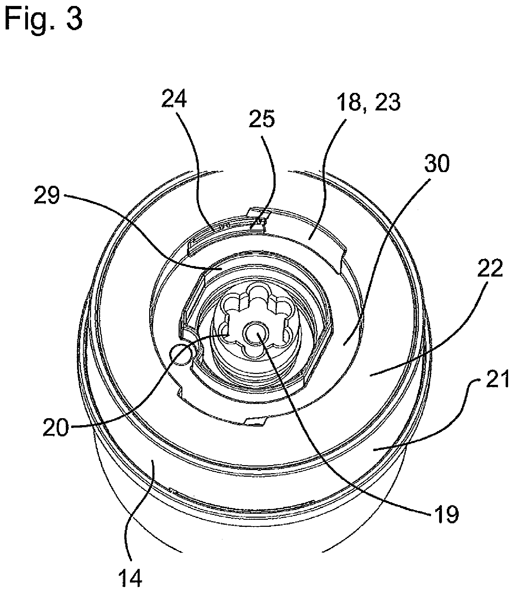

Die Gerätekupplung 18 am Bechergefäß 3, die zum festen, aber lösbaren Ankoppeln des Bearbeitungsaufsatzes 1 an eine Küchenmaschine dient, ist als ein zweiter Bajonettverschluss eingerichtet. Sie dient ebenfalls als axiale Verlustsicherung. Die Gerätekupplung 18 ist als Teil einer ringförmigen, scheibenartigen Zwischenkupplung 22 ausgeführt. Zu diesem Zweck umfasst die Zwischenkupplung 22 zwei Kupplungsöffnungen 23, durch die beim Aufsetzen des Bearbeitungsaufsatzes 1 auf die Küchenmaschine an dieser angeordnete korrespondierende Zapfen eindringen können. Die Kupplungsöffnungen 23 sind jeweils von einer Kupplungsbarriere 24 blockiert, solange das Deckelelement 2 nicht mittels des ersten Bajonettverschlusses an das Bechergefäß 3 angekoppelt ist. Wird das Deckelelement 2 jedoch an dem Bechergefäß 3 mittels des ersten Bajonettverschlusses verriegelt, so geben die Kupplungsbarrieren 24 die Kupplungsöffnungen 23 frei. Zu diesem Zweck ist die Zwischenkupplung 22 mit den Kupplungsöffnungen 23 zwischen zwei Endpositionen entlang der Innenfläche des zweiten Abschnitts 14 des Bechergefäßes 3 drehbar gelagert. Die Kupplungsbarrieren 24 sind hingegen drehfest mit der Innenseite der Wand des zweiten Abschnitts 14 des Bechergefäßes 3 verbunden. Das Verdrehen der Zwischenkupplung 22 und somit das Freigeben der Kupplungsöffnungen 23 erfolgt mittels der Zahnelemente 11a am Deckelelement 2, die beim Aufsetzen des Deckelelements 2 auf das Bechergefäß 3 in korrespondierende Zahnelemente 11b, die drehfest an der Zwischenkupplung 22 angeordnet sind, eingreifen. Die korrespondierenden Zahnelemente 11b am Bechergefäß 3 sind also, anders ausgedrückt, gegenüber dem Bechergefäß 3 rotierbar gelagert aufgrund ihrer Anordnung an der Zwischenkupplung 22. Sind die Kupplungsöffnungen 23 des zweiten Bajonettverschlusses freigegeben, kann der Bearbeitungsaufsatz 1 auf die Küchenmaschine aufgesetzt werden, da die seitens der Küchenmaschine vorgesehenen Zapfen als Teil des zweiten Bajonettverschlusses nun in die Kupplungsöffnungen 23 eindringen können. Durch Verdrehen des Bechergefäßes 3 gegenüber der Küchenmaschine können die Zapfen dann in Nuten 25 in den Kupplungsbarrieren 24 parallel zur Drehrichtung zwischen Bearbeitungsaufsatz 1 und Küchenmaschine eingleiten, wie Figur 3 zeigt. Der zweite Bajonettverschluss hält daraufhin den Bearbeitungsaufsatz 1 fest, aber lösbar auf der Küchenmaschine und verhindert ein unerwünschtes axiales Lösen.

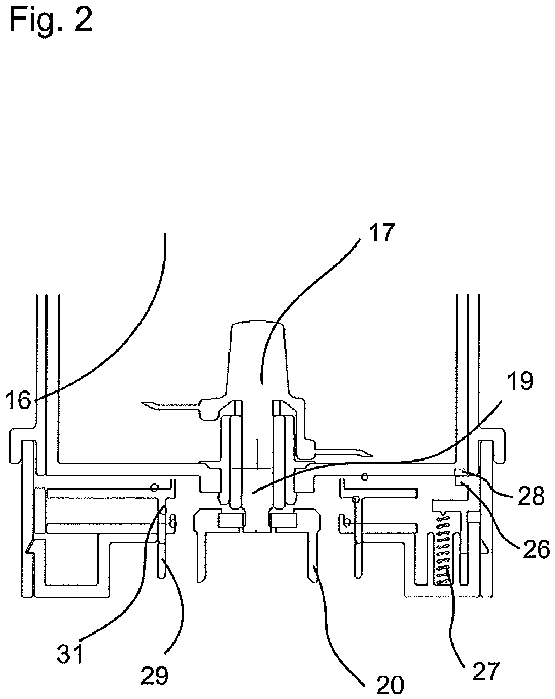

Um zu erschweren, dass die Zwischenkupplung 22 beispielsweise durch manuelle Manipulation gegenüber dem Bechergefäß 3 rotiert wird und somit die Kupplungsöffnungen 23 freigegeben werden, ohne dass das Deckelelement 2 auf das Bechergefäß 3 aufgesetzt worden ist, weist der Bearbeitungsaufsatz 1 eine Zwischenkupplungsrotationsblockade auf, die insbesondere in den Figuren 1 und 2 zu sehen ist. Sie blockiert eine Rotation der Zwischenkupplung 22, solange das Deckelelement 2 nicht auf das Bechergefäß 3 aufgesetzt ist. Die Zwischenkopplungsrotationsblockade umfasst einen Rotationsblockadezapfen 26, der durch eine Spiralfeder 27 in eine Blockadeposition vorgespannt ist. In der Blockadeposition greift der Rotationsblockadezapfen 26 in eine Rastöffnung 28 am Bechergefäß 3 ein. Wird das Deckelelement 2 auf das Bechergefäß 3 ordnungsgemäß aufgesetzt, was in den Figuren 1, 2 und 5b zu sehen ist, verlagert das Deckelelement 2 den Rotationsblockadezapfen 26 entgegen einer Federkraft der Spiralfeder 27 aus der Rastöffnung 28 des Bechergefäßes 3 heraus. Dies erfolgt durch eines der Zahnelemente 11a am Deckelelement 2 und ist in Figur 5b zu sehen. Erst dann kann die Zwischenkupplung 22 durch Verdrehen korotatorisch zum Deckelelement 2, bewirkt über die Drehmitnahme der Zahnelemente 11b durch die Zahnelemente 11a, die Kupplungsöffnungen 23 der Gerätekupplung 18 freigeben. Im Gegensatz dazu ist in Figur 4b ein Fall zu sehen, in dem das Deckelelement 2 zwar auf das Bechergefäß 3 aufgesetzt ist, jedoch auf eine Art, in der der erste Bajonettverschluss zwischen Deckelelement 2 und Bechergefäß 3 nicht verschließbar ist. Dann stehen weder die Zahnelemente 11a und 11b miteinander in Eingriff, noch verlagert eines der Zahnelemente 11a den Rotationsblockadezapfen 26 entgegen seiner Vorspannung aus der Rastöffnung 28 heraus. Die Folge dessen ist, dass die Zwischenkupplung 22 nicht rotiert werden kann. Also können in diesem Fall wie beabsichtigt die Kupplungsöffnungen 23 nicht freigegeben und das Bechergefäß 3 nicht auf die Küchenmaschine aufgesetzt werden.

Sobald der Bearbeitungsaufsatz 1 auf die Küchenmaschine aufgesetzt ist, so dass eine Kraftübertragung auf die Abtriebsachse 19 am Bechergefäß 3 durch den Antrieb der Küchenmaschine möglich ist, aber bereits bevor der Bearbeitungsaufsatz 1 durch eine Drehbewegung mittels der Gerätekupplung 18 per zweitem Bajonettverschluss an der Küchenmaschine befestigt ist, ist es nicht mehr möglich, das Deckelelement 2 von dem Bechergefäß 3 zu lösen. Dies bleibt so lange unmöglich, wie der Bearbeitungsaufsatz 1 auf die Küchenmaschine aufgesetzt ist. Dadurch kann der Benutzer beispielsweise vor Verschmutzungen und Verletzungen besser geschützt werden, die eintreten können, falls das Bearbeitungswerkzeug 17 im Bearbeitungsaufsatz 1 angetrieben werden, ohne dass das Deckelelement 2 das Bechergefäß 3 wirksam verschließt.

Ermöglicht wird diese mechanische Blockade des Deckelelements 2 durch ein elastisch vorgespanntes Kontaktelement 29 im zweiten Abschnitt 14 des Bechergefäßes 3. Es ist insbesondere in den Figuren 3, 4a und 5a deutlich zu erkennen. Das Kontaktelement 29 ist koaxial bezüglich der Abtriebskupplung 20 für das Bearbeitungswerkzeug 17 angeordnet, die aus der Bodenfläche 30 der Zwischenkupplung 22 herausragt. Zudem ist es drehfest in Bezug auf die Zwischenkupplung 22 angeordnet. Dies wird durch die beschnittene Kreisform des ringförmigen Kontaktelementes 29 erreicht. Das Kontaktelement 29 umgibt die Abtriebskupplung 20 der Abtriebsachse 19 abschnittsweise. Das Kontaktelement 29 kennt eine Freigabestellung, in der das Deckelelement 2 vom Bechergefäß 3 durch Verdrehen aus dem ersten Bajonettverschluss gelöst werden kann, und eine Haltestellung, in der das Deckelelement 2 nicht aus dem ersten Bajonettverschluss gelöst werden und somit nicht vom Bechergefäß 3 entfernt werden kann. Das Kontaktelement 29 ist durch ein elastisches Element 31, in diesem Fall eine weitere Spiralfeder, die die Abtriebsachse koaxial umgibt und zwischen Kontaktelement 29 und einer Trennwand des Bechergefäßes 3 zwischen erstem Abschnitt 13 und zweiten Abschnitt 14 des Bechergefäßes 3 eingespannt ist, in die Freigabestellung vorgespannt. Das ist beispielsweise in den Figuren 2 und 4b gezeigt. In der Freigabestellung, die in Figur 4b illustriert ist, steht das Kontaktelement 29 weiter aus einer Bodenfläche 30 der Zwischenkupplung 22 hervor als in der Haltestellung, die in Figur 5b illustriert ist. Wird nun der Bearbeitungsaufsatz 1 auf die Küchenmaschine aufgesetzt, wird durch den Kontakt mit einem Kupplungsbereich der Küchenmaschine das Kontaktelement 29 in der Bodenfläche 30 der Zwischenkupplung 22 von der Freigabestellung entgegen der Vorspannung in die Haltestellung verlagert. Dann schließt das Kontaktelement 29 nach außen bündig mit der Bodenfläche 30 der Zwischenkupplung, die in diesem Bereich von einer zurückversetzten Oberfläche der Zwischenkupplung 22 gebildet wird, ab, steht also nicht oder zumindest vergleichsweise weniger, bezogen auf die Freigabestellung, über die Oberfläche der Zwischenkupplung 22 hervor.

Am Kontaktelement 29 sind mehrere Nasen von einem ersten Nasentyp 32 angebracht, die insbesondere in den Figuren 4a und 5a zu erkennen sind. Jede der Nasen vom ersten Nasentyp 32 kann in der Haltestellung des Kontaktelementes 29 mit einer der Kupplungsbarrieren 24 wechselwirken. Durch das Verlagern des Kontaktelementes 29 wird die Nase vom ersten Nasentyp 32 derart ebenfalls entgegen der Vorspannung des elastischen Elements 31 verlagert, dass sie ein Zurückdrehen der Zwischenkupplung 22 unterbunden wird. Dies wird dadurch erreicht, dass jeweils eine Nase vom ersten Nasentyp 32 beim Aufsetzen und Verriegeln des Deckelelements 2 auf dem Bechergefäß 3 durch relatives Verdrehen der Zwischenkupplung 22 seitlich in jeweils eine Nasenführungsnut 33 in einer der Kupplungsbarrieren 24 eindreht und beim anschließenden Verlagern des Kontaktelementes 29 in axialer Richtung durch Aufsetzen des Bearbeitungsaufsatzes 1 auf die Küchenmaschine senkrecht zur Verdrehungsrichtung der Zwischenkupplung 22 aus der Nasenführungsnut 33 weg von der Abtriebskupplung 21 herausgeschoben wird. Ein Zurückdrehen der Zwischenkupplung 22 wird in dieser Stellung der Nasen vom ersten Nasentyp 32 wirksam blockiert, da mangels Nasenführungsnut 33 in den Kupplungsbarrieren 24 in der Ebene, in die die Nasen vom ersten Nasentyp 32 verlagert worden sind, ein Zurückdrehen der Zwischenkupplung 22 in die Ausgangsstellung mechanisch unmöglich ist. Weil die Zwischenkupplung 22 über die korrespondierenden Zahnelemente 11b mit den Zahnelementen 11a am Deckelelement 2 in Verbindung steht, wird auf diese Weise auch ein Verdrehen des Deckelelements 2 wirksam verhindert. Somit kann das Deckelelement 2 nicht mehr aus dem ersten Bajonettverschluss gelöst werden, so lange der Bearbeitungsaufsatz 1 auf der Küchenmaschine aufgesetzt ist und ein Antreiben der Bearbeitungswerkzeuge 17 im Bearbeitungsinnenraum 15 des Bechergefäßes 3 möglich ist. Um das Deckelelement 2 zu arretieren, muss also der zweite Bajonettverschluss noch nicht geschlossen sein, sondern ein Aufsetzen des Bearbeitungsaufsatzes 1 auf die Küchenmaschine ist schon ausreichend.

Zudem sind am Kontaktelement 29 Nasen von einem zweiten Nasentyp 34 angebracht. Sie werden ebenfalls kolinear mit dem Kontaktelement 29 verschoben, sobald das Bechergefäß 3 mit dem Deckelelement 2 auf die Küchenmaschine aufgesetzt wird. Die Nasen vom zweiten Nasentyp 34 interagieren mit den Zahnelementen 11a am Deckelelement 2 und wirken ebenfalls gegen das Zurückdrehen der Zwischenkupplung 22, sobald das Bechergefäß 3 mit dem darauf festgedrehten Deckelelement 2 auf die Küchenmaschine aufgesetzt wird. Dann greifen die Nasen vom zweiten Nasentyp 34 zwischen die Zahnelemente 11a ein und unterstützen so die Blockadewirkung der Nasen vom ersten Nasentyp 32 wirkungsvoll an anderer Stelle. Zudem blockieren die Nasen vom zweiten Nasentyp 34 die Verlagerung des Kontaktelements 29, solange das Deckelelement 2 nicht wie vorgesehen mit dem Bechergefäß 3 verschlossen ist, da die Nasen vom zweiten Nasentyp 34 nur entgegen der Vorspannung verlagert werden können, wenn sie sich gegenüber eines Zwischenraums zwischen zwei Zahnelementen 11a befinden. So wird auch eine Verlagerung des Kontaktelements 29 verhindert, solange das Deckelelement das Bechergefäß nicht korrekt verschließt. Dadurch, dass das Kontaktelelement 29 dann in den Bereich der Gerätekupplung hervorsteht und in der Haltestellung blockiert ist, ist auch die Gerätekupplung 18 blockiert und ein Aufsetzen und Ankoppeln des Bearbeitungsaufsatzes 1 auf die Küchenmaschine unmöglich. Es ist offensichtlich, dass entweder die Nasen vom ersten Nasentyp 32 oder die Nasen vom zweiten Nasentyp 34 eingespart werden können, beispielsweise aus Kostengründen, ohne die Sicherungsfunktion grundsätzlich zu beeinträchtigen. Allerdings wird die beste Festigkeit der Rückdrehsicherung für das Deckelelement 2 durch die kombinierte Wirkung der Nasen vom ersten Nasentyp 32 und der Nasen vom zweiten Nasentyp 34 erreicht.

Die Erfindung ermöglicht somit auf zwei verschiedene Arten, insbesondere die Sicherheit und die Handhabbarkeit eines Bearbeitungsaufsatzes 1 für eine Küchenmaschine zu verbessern. Einerseits wird mechanisch verhindert, dass der Bearbeitungsaufsatz 1 mit der Küchenmaschine verbunden wird, solange das Deckelement 2 das Bechergefäß 3 nicht ordnungsgemäß verschließt. Zu diesem Zweck sind die Kupplungsöffnungen 23 der Gerätekupplung 18 solange blockiert, wie das Deckelelement 2 nicht mittels des ersten Bajonettverschlusses an dem Bechergefäß 3 gegen axialen Verlust gesichert ist. Außerdem steht in diesem Fall zusätzlich das Kontaktelement 29 unverlagerbar in den Bereich der Gerätekupplung 18 hervor, da die Nasen vom zweiten Nasentyp 34 translatorisch blockiert sind. Andererseits wird verhindert, dass das Deckelelement 2 vom Bechergefäß 3 gelöst werden kann, solange der Bearbeitungsaufsatz 1 auf die Küchenmaschine aufgesetzt ist. Die axial verlagerbaren Nasen vom ersten Nasentyp 32 und vom zweiten Nasentyp 34 blockieren ein Lösen des Deckelelements 2, solange der Bearbeitungsaufsatz 1 auf die Küchenmaschine aufgesetzt ist. Die Kombination beider Sicherheitslösungen kann sich besonders vorteilhaft auf den Bearbeitungsaufsatz 1 auswirken. Allerdings sind beide Lösungen auch getrennt einsetzbar, beispielsweise indem man die Kupplungsbarrieren 24 derart umgestaltet, dass sie zwar die Nasen vom ersten Nasentyp 32 oder auch die Nasen vom zweiten Nasentyp 34 gegen Rotation blockieren können, jedoch keinen Einfluss auf die Betriebsbereitschaft der Gerätekupplung 18 nehmen, wodurch nur die Sperre des Deckelelements realisierbar wäre, oder beispielsweise indem man das Kontaktelement 29 einspart, wodurch nur die Blockade der Gerätekupplung 18 realisierbar wäre. Eine einfache, kostengünstige und wirkungsvolle Lösung zur Verbesserung eines Bearbeitungsaufsatzes 1 speziell unter Gesichtspunkten der Betriebssicherheit ist somit auf unterschiedlichen Wegen erreichbar. Durch die ausschließliche Nutzung mechanischer Sperrfunktionen kann eine kostengünstigere Herstellung solcher gesicherter Bearbeitungsaufsätze 1 ermöglicht werden. Zudem kann dadurch, dass die Sicherung vollständig seitens des Bearbeitungsaufsatzes 1 realisiert ist, auch bei bereits vorhandenen Küchenmaschinen auf einfache Weise eine Verbesserung der Sicherheit durch Austausch des Bearbeitungsaufsatzes 1 ermöglicht werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Bearbeitungsaufsatz
- 2: Deckelelement
- 3: Bechergefäß
- 4: erster Abschnitt des Deckelelements
- 5: offenes Ende
- 6: zweiter Abschnitt des Deckelelements
- 7: Ringaußenwand
- 8: Ringinnenwand
- 9: Ringspalt
- 10: Innenfläche
- 11a, b: Zahnelement
- 12: rampenförmige Wand
- 13: erster Abschnitt des Bechergefäßes
- 14: zweiter Abschnitt des Bechergefäßes
- 15: Bearbeitungsinnenraum
- 16: Arbeitsöffnung
- 17: Bearbeitungswerkzeug
- 18: Gerätekupplung
- 19: Abtriebsachse
- 20: Abtriebskupplung
- 21: Außenwand
- 22: Zwischenkupplung
- 23: Kupplungsöffnung
- 24: Kupplungsbarriere
- 25: Nut
- 26: Rotationsblockadezapfen
- 27: Spiralfeder
- 28: Rastöffnung
- 29: Kontaktelement
- 30: Bodenfläche
- 31: elastisches Element
- 32: erster Nasentyp
- 33: Nasenführungsnut
- 34: zweiter Nasentyp

## Patentansprüche

1. Bearbeitungsaufsatz (1) zur Nahrungsmittelbearbeitung für die Verwendung mit einer Küchenmaschine, der ein Deckelelement (2) und ein Bechergefäß (3) aufweist, wobei das Deckelelement (2) das Bechergefäß (3) abdichtend schließen kann, und das Bechergefäß (3) in einem von dem Deckelelement (2) und dem Bechergefäß (3) gemeinsam umschließbaren Bearbeitungsinnenraum (15) des Bearbeitungsaufsatzes (1) ein oder mehrere Bearbeitungswerkzeuge (17), die eine oder mehrere nach außen freiliegende Abtriebskupplungen (20) aufweisen, über die sie rotierbar antreibbar sind, und/oder die ein oder mehrere Bearbeitungswerkzeugkupplungen, die eine oder mehrere nach außen freiliegende Abtriebskupplungen (20) aufweisen, über die sie rotierbar antreibbar sind, zur Befestigung eines oder mehrerer Bearbeitungswerkzeuge (17) aufweist und das Bechergefäß (3) eine Gerätekupplung (18) aufweist, über die der Bearbeitungsaufsatz (1) an die Küchenmaschine lösbar ankoppelbar ist,
wobei die Gerätekupplung (18) ausschließlich dann ein Ankoppeln des Bearbeitungsaufsatzes (1) an die Küchenmaschine ermöglicht, wenn das Deckelelement (2) das Bechergefäß (3) schließt und zudem am Bechergefäß (3) gegen axialen Verlust gesichert ist, wobei seitens des Deckelelements (2) ein oder mehrere Zahnelemente (11a) vorhanden sind, die in ein oder mehrere korrespondierende Zahnelemente (11b) seitens des Bechergefäßes (3) eingreifen und diese verlagern können, wenn das Bechergefäß (3) mit dem Deckelelement geschlossen ist, so dass nach Verlagern der korrespondierenden Zahnelemente (11b) die Gerätekupplung (18) ein Ankoppeln des Bearbeitungsaufsatzes (1) ermöglicht, **dadurch gekennzeichnet, dass** die korrespondierenden Zahnelemente (11b) seitens des Bechergefäßes (3) an einer Zwischenkupplung (22), die die Gerätekupplung (18) umfasst, angeordnet sind, wobei die Zwischenkupplung (22) gegenüber dem Bechergefäß (3) rotierbar gelagert ist, wobei die Gerätekupplung und die Zwischenkupplung zueinander drehfest sind, so kann durch Drehen des Deckelelements (2) auf dem Bechergefäß (3) die Zwischenkupplung (22) mitrotiert werden.

2. Bearbeitungsaufsatz (1) nach Anspruch 1, **dadurch gekennzeichnet, dass** das Deckelelement (2) an das Bechergefäß (3) mittels eines ersten Bajonettverschlusses lösbar ankoppelbar ist, um das Deckelelement (2) am Bechergefäß (3) gegen axialen Verlust zu sichern.

3. Bearbeitungsaufsatz (1) nach einem der vorhergehenden Ansprüche, **dadurch gekennzeichnet, dass** die Gerätekupplung (18) einen Blockadezustand, in der die Gerätekupplung (18) ein Koppeln mit der Küchenmaschine mechanisch nicht zulässt, und einen Kuppelzustand, in der die Gerätekupplung (18) ein Koppeln mit der Küchenmaschine mechanisch zulässt, aufweist, und nur dann, wenn sich die Gerätekupplung (18) im Kuppelzustand befindet, ein Ankoppeln an die Küchenmaschine möglich ist.

4. Bearbeitungsaufsatz (1) nach Anspruch 1, **dadurch gekennzeichnet, dass** die Zahnelemente (11a) am Deckelelement (2) die Fortsetzung einer Innenwand des Deckelelements (2) in axialer Richtung darstellen und in axialer Richtung von dem Deckelelement (2) abstehen.

5. Küchenmaschine, insbesondere eine Standküchenmaschine, mit einem Bearbeitungsaufsatz (1) nach Anspruch 1.

## Claims

1. Processing attachment (1) for processing foodstuffs, for use with a food processor, which has a cover element (2) and a beaker vessel (3), wherein the cover element (2) is able to close the beaker vessel (3) in a sealing manner, and the beaker vessel (3), in a processing interior (15) of the processing attachment (1) which can be jointly enclosed by the cover element (2) and the beaker vessel (3), has one or more processing tools (17) having one or more output couplings (20) which are open to the outside, via which the processing tools (17) can be driven in a rotatable manner, and/or has one or more processing tool couplings having one or more output couplings (20) which are open to the outside, via which the processing tools (17) can be driven in a rotatable manner, in order to fasten one or more processing tools (17), and the beaker vessel (3) has a device coupling (18), via which the processing attachment (1) can be coupled to the food processor in a releasable manner,
wherein the device coupling (18) then exclusively enables a coupling of the processing attachment (1) to the food processor when the cover element (2) closes the beaker vessel (3) and additionally is protected at the beaker vessel (3) against axial loss, wherein on the side of the cover element (2) one or more tooth elements (11a) are present, which engage into one or more corresponding tooth elements (11b) on the side of the beaker vessel (3) and are able to displace it when the beaker vessel (3) is closed with the cover element, so that once the corresponding tooth elements (11b) have been displaced, the device coupling (18) enables a coupling of the processing attachment (1), **characterised in that** the corresponding tooth elements (11b) are arranged on the side of the beaker vessel (3) on an intermediate coupling (22), which comprises the device coupling (18), wherein the intermediate coupling (22) is mounted such that it can rotate in relation to the beaker vessel (3), wherein the device coupling and the intermediate coupling are non-rotating in relation to one another, so that the intermediate coupling (22) can also be rotated by rotating the cover element (2) on the beaker vessel (3).

2. Processing attachment (1) according to claim 1, **characterised in that** the cover element (2) can be coupled to the beaker vessel (3) in a releasable manner by means of a first bayonet closure, in order to secure the cover element (2) against axial loss on the beaker vessel (3).

3. Processing attachment (1) according to one of the preceding claims, **characterised in that** the device coupling (18) has a blocking state, in which the device coupling (18) mechanically does not permit a coupling to the food processor, and a coupling state, in which the device coupling (18) mechanically permits a coupling to the food processor, and only when the device coupling (18) is in the coupling state is it possible to couple to the food processor.

4. Processing attachment (1) according to claim 1, **characterised in that** the tooth elements (11a) on the cover element (2) represent the continuation of an inner wall of the cover element (2) in the axial direction and protrude from the cover element (2) in the axial direction.

5. Food processor, in particular a standing food processor, with a processing attachment (1) according to claim 1.

## Revendications

1. Accessoire de préparation (1) destiné à la préparation d'aliments pour l'utilisation avec un robot culinaire qui présente un élément formant couvercle (2) et un bol (3), dans lequel l'élément formant couvercle (2) peut fermer le bol (3) de manière hermétique, et le bol (3) présente dans un espace interne de préparation (15), pouvant être entouré en commun par l'élément formant couvercle (2) et le bol (3), de l'accessoire de préparation (1) un ou plusieurs outils de préparation (17) qui présentent un ou plusieurs couplages de sortie se détachant vers l'extérieur (20) par le biais desquels ils peuvent être entraînés de manière rotative, et/ou les un ou plusieurs couplages d'outils de préparation qui présentent un ou plusieurs couplages de sortie se détachant vers l'extérieur (20) par le biais desquels ils peuvent être entraînés en rotation, pour la fixation d'un ou plusieurs outils de préparation (17) et le bol (3) présente un couplage d'appareil (18) par le biais duquel l'accessoire de préparation (1) peut être couplé de manière amovible au robot culinaire,
dans lequel le couplage d'appareil (18) rend possible exclusivement un couplage de l'accessoire de travail (1) au robot culinaire lorsque l'élément formant couvercle (2) ferme le bol (3) et est en outre protégé au niveau du bol (3) contre une déformation axiale, dans lequel du côté de l'élément formant couvercle (2) un ou plusieurs éléments dentés (11a) sont présents, qui se mettent en prise dans un ou plusieurs éléments dentés (11b) correspondants du côté du bol (3) et peuvent les déplacer lorsque le bol (3) est fermé avec l'élément formant couvercle de sorte que, après le déplacement des éléments dentés (11b) correspondants, le couplage d'appareil (18) rend possible un couplage de l'accessoire de travail (1),
**caractérisé en ce que** les éléments dentés (11b) correspondants sont disposés du côté du bol (3) au niveau d'un couplage intermédiaire (22) qui comprend le couplage d'appareil (18), dans lequel le couplage intermédiaire (22) est monté de manière rotative à l'opposé du bol (3), dans lequel le couplage d'appareil et le couplage intermédiaire sont fixes en rotation l'un par rapport à l'autre, le couplage intermédiaire (22) pouvant ainsi également être entraîné en rotation par l'intermédiaire d'une rotation de l'élément formant couvercle (2) sur le bol (3).

2. Accessoire de préparation (1) selon la revendication 1, **caractérisé en ce que** l'élément formant couvercle (2) peut être couplé de manière amovible au bol (3) au moyen d'une première fermeture à baïonnette pour protéger l'élément formant couvercle (2) au niveau du bol (3) contre une déformation axiale.

3. Accessoire de préparation (1) selon l'une des revendications précédentes, **caractérisé en ce que** le couplage d'appareil (18) présente un état de blocage dans lequel le couplage d'appareil (18) ne permet pas mécaniquement un couplage avec le robot culinaire et un état de couplage dans lequel le couplage d'appareil (18) permet mécaniquement un couplage avec le robot culinaire et un couplage au robot culinaire n'est possible que lorsque le couplage d'appareil (18) se trouve dans l'état de couplage.

4. Accessoire de préparation (1) selon la revendication 1, **caractérisé en ce que** les éléments dentés (11a) représentent dans la direction axiale au niveau de l'élément formant couvercle (2) la continuité d'une paroi interne de l'élément formant couvercle (2) et font saillie dans la direction axiale à partir de l'élément formant couvercle (2).

5. Robot culinaire, en particulier robot culinaire fixe, comprenant un accessoire de préparation (1) selon la revendication 1.
